# EUROPEAN PATENT APPLICATION

(11) **EP 2 701 071 A1**
(43) Date of publication of application: **26.02.2014**
(21) Application number: 12774827.5
(22) Date of filing: 16.04.2012
(51) Int. Cl.: G06F 13/00

(54) **TRANSMISSION DEVICE, DATA PROCESSING METHOD AND PROGRAM**

(30) Priority: 19.04.2011 JP 2011093067
(71) Applicant: NEC CASIO Mobile Communications, Ltd., Kawasaki-shi, Kanagawa 211-8666 (JP)
(72) Inventor: HOSONO, Shizu, Kawasaki-shi Kanagawa 211-8666 (JP)
(74) Representative: Vossius & Partner
(86) International application number: PCT/JP2012/060236
(87) International publication number: WO 2012/144447

(57) **Abstract**

A transmission device (10) includes a transmission unit (12) that transmits data to a transmission destination, and memory (11) that holds in mutual correspondence used data transmitted by the transmission unit (12) and the transmission destinations of the used data. Upon receiving transmission data scheduled for transmission, the transmission device (10) refers to the memory (11) to identify relevant data that have been placed in correspondence with the transmission destination of the transmission data and reports identified information according to the relevant data.

## Description

The present invention relates to a transmission device, a data processing method, and a program.

### Background Art

Japanese Unexamined Patent Application Publication No. 2010-015221 (hereinbelow referred to as Patent Document 1) discloses a portable device for creating electronic mail. The portable device described in Patent Document 1 includes an operation unit that detects the input of a character string of electronic mail and a storage unit that stores pictographs and a correspondence chart in which pictographs and predetermined character strings are placed in correspondence.

When a predetermined character string that has been placed in correspondence with a pictograph is present in a character string of electronic mail that is detected by the operation unit, the portable device described in Patent Document 1 inserts the pictograph that was stored in the storage unit into the e-mail.

### Summary of the Invention

In the portable device described in Patent Document 1, a pictograph that is stored in the storage unit is inserted into an e-mail when a predetermined character string is present in the e-mail. The e-mail into which the pictograph is inserted is transmitted to the destination that is designated by the user. Pictographs that are stored in the storage unit are sometimes inserted even when the user newly creates e-mail of the same destination. In such cases, an e-mail into which the same pictographs have been inserted is transmitted to the partner of the same destination.

A user that creates an e-mail sometimes does not wish to use the same pictographs with the same partner. In order not to use the same pictographs with the same partner, the user must take the time and trouble to operate the portable device to check the e-mail that has been transmitted and that is stored in the portable device.

As a result, it has been difficult for a user to easily search for data such as pictographs that have been transmitted to the transmission destination of e-mail.

An exemplary object of the invention is to provide a transmission device, data processing method, and program that can facilitate the search for data that have been transmitted to a transmission destination of data.

A transmission device according to an exemplary aspect of the invention includes:
transmission means that transmits data to a transmission destination; holding means that holds in mutual correspondence predetermined data that have been transmitted by the transmission means and the transmission destinations of the predetermined data; and
processing means that, upon receipt of transmission data that are scheduled for transmission, refers to the holding means to identify predetermined data that have been placed in correspondence with the transmission destination of the transmission data as relevant data, and reports the identified information according to the relevant data.

A data processing method according to an exemplary aspect of the invention is a data processing method of a transmission device having transmission means that transmits data to a transmission destination and includes:
a holding step of holding predetermined data that were transmitted by the transmission means and the transmission destination of the predetermined data in mutual correspondence in a holding means; and
a processing step of, upon receipt of transmission data that are scheduled for transmission, referring to the holding means to identify predetermined data that have been placed in correspondence with the transmission destination of the transmission data as relevant data and reporting the identified information according to the relevant data.

A program according to an exemplary aspect of the invention causes a computer in a transmission device that has a transmission means that transmits data to a transmission destination to execute:
a holding procedure of holding predetermined data that have been transmitted by the transmission means in correspondence with the transmission destination of the predetermined data in a holding means; and
a processing procedure of, upon receipt of transmission data that are scheduled for transmission, referring to the holding means to identify as relevant data predetermined data that have been placed in correspondence with the transmission destination of the transmission data and reporting the identified information according to the relevant data.

### Brief Description of the Drawings

FIG. 1 is a block diagram showing an example of the configuration of the transmission device in the first exemplary embodiment of the present invention.
FIG. 2 shows an example of the data format of a usage history management list of pictographs.
FIG. 3 shows an example of a screen for creating new e-mail.
FIG. 4 shows an example of warning information that warns of the reuse of pictographs.
FIG. 5 is a flow chart showing the data processing method of the transmission device.
FIG. 6 is a flow chart showing the data processing method of the transmission device in the second exemplary embodiment.
FIG. 7 shows an example of a display in which pictographs that have been used are subjected to a half-tone dot meshing process.
FIG. 8 shows an example of a display in which pictographs other than pictographs that have been used are displayed.
FIG. 9 shows an example in which telephone directory data are used as a usage history management list.

### Description of Embodiments

Exemplary embodiments of the present invention are next described with reference to the accompanying drawings.

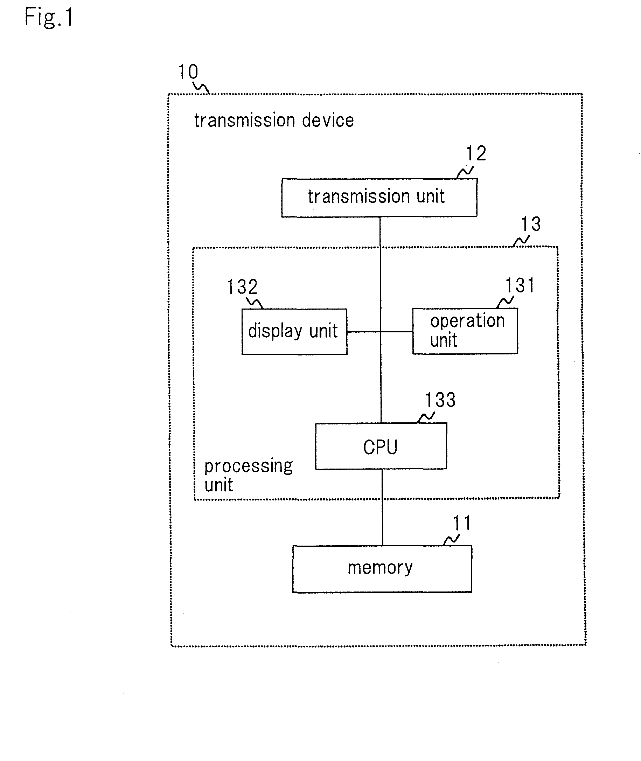

FIG. 1 is a block diagram showing an example of the configuration of the transmission device in the first exemplary embodiment of the present invention.

Transmission device 10 is a portable terminal having e-mail functions. In the present exemplary embodiment, transmission device 10 executes the e-mail functions to carry out the transmission, reception, and editing of e-mail of the HTML (HyperText Markup Language) format.

Transmission device 10 is realized by, for example, a portable telephone, a smartphone, a portable information terminal, or a game device. Transmission device 10 is equipped with memory 11, transmission unit 12, and processing unit 13. Processing unit 13 is equipped with operation unit 131, display unit 132, and CPU (Central Processing Unit) 133.

Transmission unit 12 can also typically be called a transmission means.

Transmission unit 12 transmits data to a transmission destination. For example, transmission unit 12, upon receiving an e-mail, transmits the e-mail to the e-mail destination.

Memory 11 can also typically be called a holding means.

Memory 11 holds the used data of e-mails that have been transmitted by transmission unit 12 in correspondence with the transmission destinations of the used data. In the present exemplary embodiment, Decome pictograms (registered trademark) are used as the used data of e-mails. Here, "Decome pictograms (registered trademark)" refers to data of decorative images that are used in e-mail functions. For example, Decome pictograms (registered trademark) are realized through the use of stationary image data or animated image data.

The name "Decome (registered trademark)" is an abbreviation of "decoration mail," and Decome Pictograms (registered trademark) is the name of pictographs that are provided by NTT DoCoMo Inc. Pictographs similar to Decome pictograms (registered trademark) are called "My Pictograms" in the service provided by SoftBank Mobile Corporation, and are called "Moving Pictograms" in the service provided by the KDDI Corporation. Hereinbelow, Decome pictograms (registered trademark) are referred to as simply "pictographs" except when described as distinct from typical pictographs.

In the present exemplary embodiment, memory 11 holds a usage history management list in which pictograph IDs (identifiers) of pictographs that transmission unit 12 has transmitted and the transmission destinations of the pictographs are placed in correspondence in units of transmission destinations.

The usage history management list is a list for managing the history of the usage of pictographs that have been transmitted by transmission unit 12. In the usage history management list, for example, a "pictograph ID," "pictograph acquisition source," and "partners of use" are placed in correspondence for each pictograph that has been transmitted by transmission unit 12.

The "pictograph ID" is identification information for managing pictographs that are transmitted by transmission unit 12. The IDs that are used in the pictograph list that shows all pictographs that are held in transmission device 10 are used as the pictograph IDs. As a result, the file names of pictographs are used as the pictograph IDs. The pictograph list is held in memory 11.

The "pictograph acquisition source" is acquisition source information for managing the acquisition sources of pictographs. For example, the name of the transmission device 10 itself is indicated in the "pictograph acquisition source" of pictographs that are preset in transmission device 10, and the address of a providing server is indicated in the "pictograph acquisition source" of a pictograph that has been downloaded by way of the Internet from a providing server that provides pictographs. Still further, the address of the transmission source of electronic mail that is received by transmission device 10 is indicated in the "pictograph acquisition source" of a pictograph that is included in an electronic mail that is received by transmission device 10.

The "partners of use" is transmission destination information for managing partners for whom pictographs were used. The transmission destinations of pictographs that have been transmitted by transmission unit 12 are indicated in the "partners of use." For example, when the same pictograph is transmitted to a plurality of transmission destinations, the plurality of transmission destinations are indicated in the "partners of use" of that pictograph.

A list in which information such as "partners of use" has been added to the pictograph list is used as the usage history management list. When the transmission of a pictograph has been determined, the transmission destination is added to the "partners of use" column that is placed in correspondence with the pictograph ID in the usage history management list.

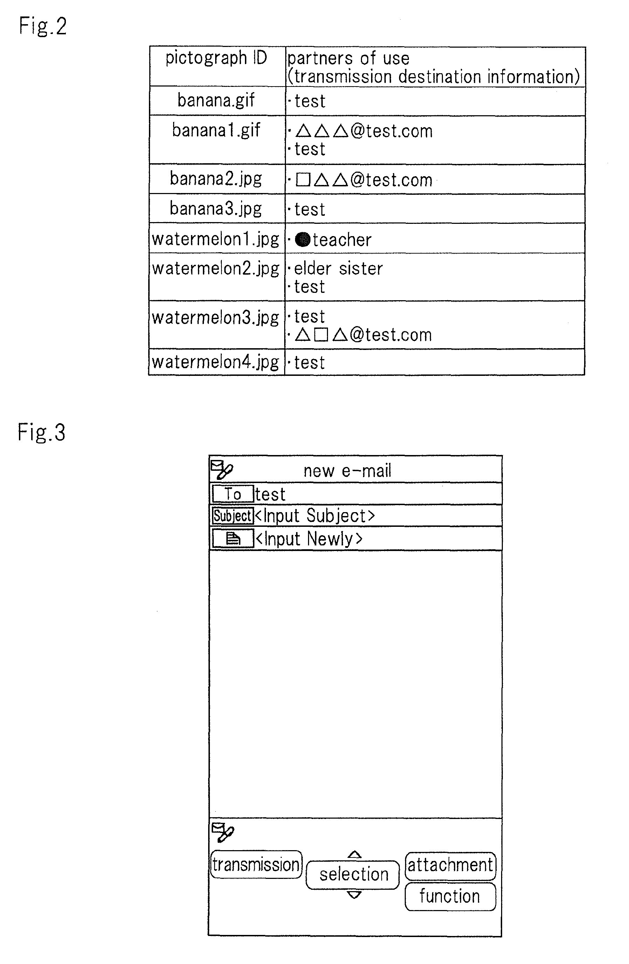

FIG. 2 is a schematic view showing an example of the usage history management list that is stored in memory 11.

In FIG. 2, the "pictograph ID" and the "partners of use" as the transmission destination information are placed in correspondence with each other for each pictograph that is transmitted by transmission unit 12 in the usage history management list.

Returning to FIG. 1, memory 11 holds programs that are executed by CPU 133. For example, memory 11 holds a mailer program for executing e-mail functions. Memory 11 is a computer-readable recording medium.

In the present exemplary embodiment, an example is described in which Decome pictograms (registered trademark) are used as the used data of electronic mail, but the data that are used as the used data are not limited to Decome pictograms (registered trademark). As the used data, image frames or image files that include pictograph data, Decome pictures, or animations may also be used.

Processing unit 13 can also typically be referred to as a processing means.

Upon receiving transmission data that are scheduled for transmission, processing unit 13 refers to the usage history management list in memory 11 to identify the pictograph IDs that have been placed in correspondence with the transmission destination of the transmission data. Of the pictograph IDs in the usage history management list, all pictograph IDs that are placed in correspondence with the transmission destination of the transmission data are hereinbelow referred to as "used pictograph IDs."

Of the used pictograph IDs, processing unit 13 identifies the pictograph IDs that are included in the transmission data. Of the used pictograph IDs, pictograph IDs that are included in the transmission data are hereinbelow referred to as "reused pictograph IDs." Processing unit 13 reports warning information indicating that pictographs identical to reused pictographs are to be transmitted.

Upon identifying reused pictographs, processing unit 13 may report warning information when, for example, the number of transmissions in which the reused pictograph was transmitted surpasses a predetermined threshold value, or may not report warning information when the number of transmissions does not surpass the predetermined threshold value.

In this example, a transmission number field for storing a count number that accords with the number of transmissions of a pictograph is provided for each pictograph ID in the usage history management list in memory 11. Processing unit 13 increments the count value that is placed in correspondence with the pictograph ID by "1" each time transmission unit 12 transmits the pictograph and stores the incremented value in the transmission number field that is provided in the usage history management list in memory 11. After accepting transmission data and identifying reused pictograph IDs that are contained in the transmission data, processing unit 13 reports warning information when the count value that is placed in correspondence with a pictograph ID surpasses a predetermined threshold value and does not report the warning information when the count value does not surpass the predetermined threshold value.

In addition, processing unit 13 may change the content of the warning information each time it identifies a reused pictograph ID. For example, with each identification of a reused pictograph ID, processing unit 13 reports the number of transmissions in which this pictograph was transmitted.

Upon receiving an instruction that is applied as input by the user's operation, operation unit 131supplies this instruction to CPU 133. For example, operation unit 131 accepts an execution instruction to execute e-mail functions. When operation unit 131 accepts data such as a character string of an electronic mail that has been applied as input by the user's operations, operation unit 131 supplies these data to CPU 133. Operation unit 131 further detects the input of pictographs that have been selected by the user and supplies the detection result to CPU 133.

CPU 133 is a computer that controls each of memory 11, transmission unit 12, operation unit 131, and display unit 132. When CPU 133 receives an instruction to execute e-mail functions from operation unit 131, CPU 133 executes the mailer program that is stored in memory 11. CPU 133 then displays the electronic mail creation screen on display unit 132.

FIG. 3 shows an example of the electronic mail creation screen that is displayed on display unit 132.

The destination ("To"), topic ("Subject"), text and text input area are shown on the electronic mail creation screen of the new e-mail. In addition, a transmission button, a selection button, an attachment button, and function buttons are shown on the creation screen. The transmission button is used for instructing the transmission of the electronic mail. The selection button is used for designating one pictograph from among a pictograph list. The attachment button is used for instructing the attachment of, for example, an image file to the electronic mail.

Returning to FIG. 1, upon receiving from operation unit 131 transmission data for which transmission is scheduled, CPU 133 refers to memory 11 to identify the pictograph IDs that are contained in the transmission data and identify the transmission destination information that indicates the transmission destinations that are placed in correspondence with the pictograph IDs.

When the transmission destination indicated by the transmission destination information matches the destination of the transmission data, CPU 133 then identifies the pictograph ID that is contained in the transmission data as a reused pictograph ID. CPU 133 displays warning information on display unit 132 indicating that pictograph that is identical to the identified reused pictograph is to be transmitted.

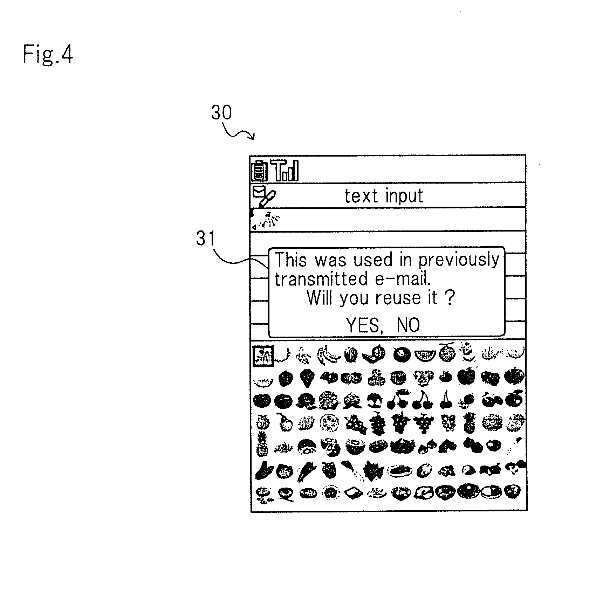

FIG. 4 shows an example of the warning information that warns of the reuse of a pictograph.

In FIG. 4, warning information 31 is displayed as a pop-up display on electronic mail creation screen 30. Warning information 31 indicates "This was used in previously transmitted e-mail. Will you reuse it? YES NO." The user then, in accordance with warning information 31, designates by operation unit 131 whether or not reuse is permitted.

Operation unit 132 displays, for example, the electronic mail creation screen or the warning information.

The operations of transmission device 10 are next described.

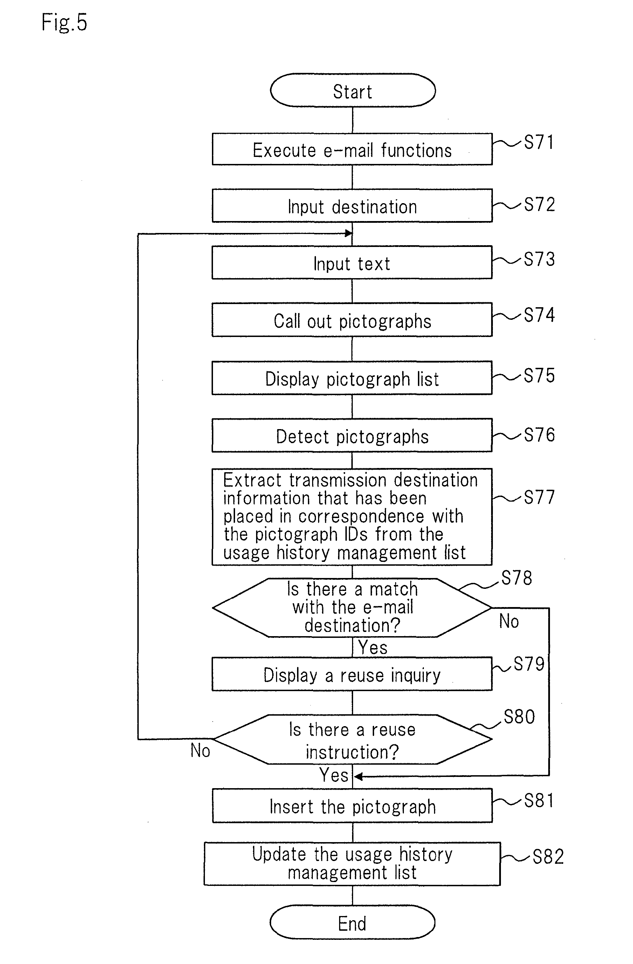

FIG. 5 is a flow chart showing the data processing method of transmission device 10.

First, when operation unit 131 accepts an execution instruction indicating the execution of e-mail functions, CPU 133 executes a mailer program in memory 11 for realizing e-mail functions (Step S71). As a result, the mailer starts up in transmission device 10 and a new e-mail creation screen such as shown in FIG. 3 is displayed on display unit 132. Then, when operation unit 131 accepts the destination of the new e-mail that is selected by the user (Step S72), display unit 132 displays this destination in the destination column of the new e-mail in accordance with the control of CPU 133. When operation 131 further accepts the subject of the new e-mail, display unit 132 displays the character string of this subject in the subject column of the new e-mail.

When operation unit 131 subsequently accepts an instruction to input to the text of the new e-mail, CPU 133 sets a state enabling text input from operation unit 131 (Step S73).

When operation unit 131 accepts a call instruction to call up the pictograph list in the state that allows text input, (Step S74), display unit 132 under the control of CPU 133 displays all data of the pictograph list in a list (Step S75).

When operation unit 131 subsequently detects the input of a pictograph that is selected by the user (Step S76), CPU 133 refers to memory 11 and compares the pictograph ID of the pictograph that operation unit 131 detected with the usage history management list shown in FIG. 2.

When the pictograph ID of the pictograph that operation unit 131 detected matches a pictograph ID in the usage history management list, CPU 133 then extracts the transmission destination information that indicates the transmission destinations that have been placed in correspondence with this pictograph ID (Step S77).

CPU 133 judges whether a transmission destination indicated by the transmission destination information that was extracted matches with the destination of the new e-mail that was received from operation unit 131 (Step S78).

When the transmission destination that is indicated by the transmission destination information does not match the destination of the new e-mail, CPU 133 inserts the pictograph that was detected by operation unit 131 into the text of the new e-mail (Step S81). CPU 133 then adds the destination of the new e-mail that was received from operation unit 131 and the pictograph ID that was detected by operation unit 131 in mutual correspondence in the usage history management list in memory 11 (Step S82), whereby the series of processing procedures of the data processing method of transmission device 10 is completed.

On the other hand, when a transmission destination indicated by the transmission destination information matches the destination of the new e-mail, CPU 133 displays warning information on display unit 132 inquiring whether or not the reuse of the pictograph is permitted (Step S79). For example, CPU 133 performs a pop-up display such as "This was used in a previously transmitted e-mail. Will you reuse it?" Transmission device 10 is thus able to make the user aware that a pictograph that the user selected is a reused pictograph.

When a refusal instruction indicating that reuse of the pictograph is not permitted is received (Step S80), operation unit 131 next cancels the insertion of the pictograph into the text of the new e-mail, returns to Step S73, and continues with the input of text.

On the other hand, if operation unit 131 receives a reuse instruction indicating that reuse of the pictograph is permitted (Step S80), CPU 133 inserts the pictograph that was detected by operation unit 131 into the text of the new e-mail (Step S81).

CPU 133 then adds the destination of the new e-mail that was received from operation unit 131 and the pictograph ID of the pictograph that was detected by operation unit 131 in correspondence with each other to the usage history management list in memory 11 (Step S82) and thus completes the series of processing procedures of the data processing method of transmission device 10.

According to the first exemplary embodiment of the present invention, in transmission device 10 that includes transmission unit 12 that transmits data to a transmission destination, pictograph IDs of used data (predetermined data) that transmission unit 12 has transmitted and the transmission destinations of these pictograph IDs are held in mutual correspondence in memory 11. Upon receiving transmission data of a scheduled transmission, processing unit 13 refers to memory 11 to identify pictograph IDs that have been placed in correspondence with the transmission destination of the transmission data as used pictograph IDs (relevant data), and reports warning information according to these used pictograph IDs. For example, processing unit 13 displays the pictograph of a used pictograph ID as the warning information. The warning information is also referred to as identified information.

As a result, transmission device 10 is able to easily search for usage data that have been transmitted to a transmission destination of transmission data.

In the present exemplary embodiment, memory 11 holds pictograph IDs and transmission destinations of these pictographs for each pictograph ID, and processing unit 13 identifies pictograph IDs that are contained in transmission data among used pictograph IDs as reused pictograph IDs (identified relevant data). Processing unit 13 then reports to the user that a pictograph that is identical to a used pictograph is to be transmitted.

As a result, the user is able, without operating transmission device 10 to check transmitted e-mail that is stored in transmission device 10, to avoid again transmitting data that are the same as pictographs that transmission device 10 has transmitted. Accordingly, the user is able to create unique e-mail using pictographs with ample variation.

The transmission device in the second exemplary embodiment of the present invention is next described. The basic configuration of the second exemplary embodiment is similar to that of transmission device 10 shown in FIG. 1.

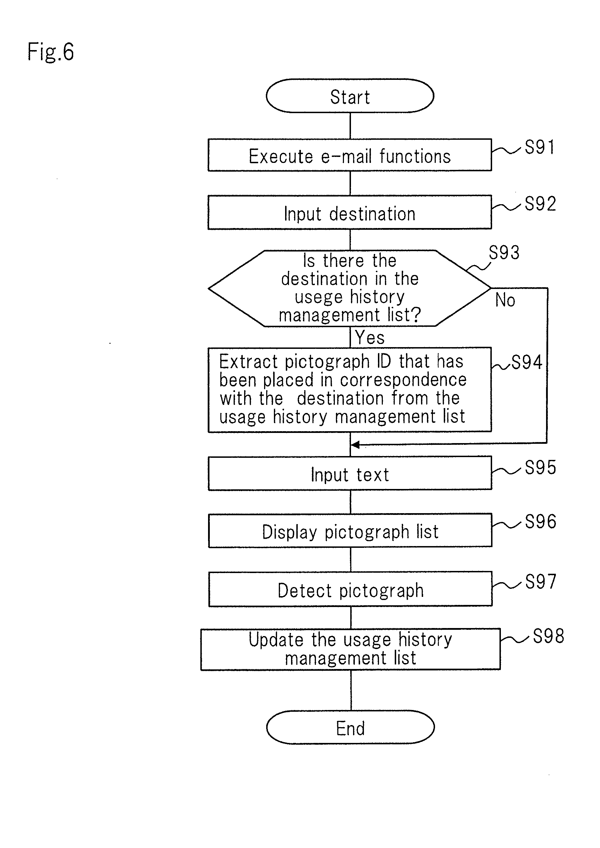

FIG. 6 is a flow chart showing the data processing method of the transmission device in the second exemplary embodiment.

First, when operation unit 131 receives an execution instruction to execute e-mail functions, CPU 133 executes the mailer program in memory 11 (Step S91). As a result, the mailer is launched in transmission device 10 and a creation screen for a new e-mail such as shown in FIG. 3 is displayed on display unit 132.

When operation unit 131 then receives the destination of the new e-mail that is selected by the user (Step S92), display unit 132 under the control of CPU 133 displays this destination in the destination column of the new e-mail. CPU 133 in addition to this operation refers to the transmission destination that is indicated in the "partners of use" column of the usage history management list shown in FIG. 2 and compares the destination of the new e-mail that was received from operation unit 13 with transmission destinations in the usage history management list (Step S93).

When the destination of the new e-mail matches a transmission destination in the usage history management list, CPU 133 extracts the pictograph IDs that were placed in correspondence with this destination (Step S94). Then, when operation unit 131 receives an instruction to input text of the new e-mail, CPU 133 sets a state that allows text input from operation unit 131 (Step S95). On the other hand, if the destination of the new e-mail does not match with a transmission destination in the usage history management list, the process advances to Step S95 and a state is set that allows text input from operation unit 131.

In the state that allows text input, when operation unit 131 receives a call instruction to call out a pictograph list (Step S96), CPU 133 implements a display process upon the data of, from among pictographs that are displayed on display unit 132, the used pictographs of IDs that were extracted in Step S94, a display process that differs from the display process that is performed on other pictographs, and displays the pictographs.

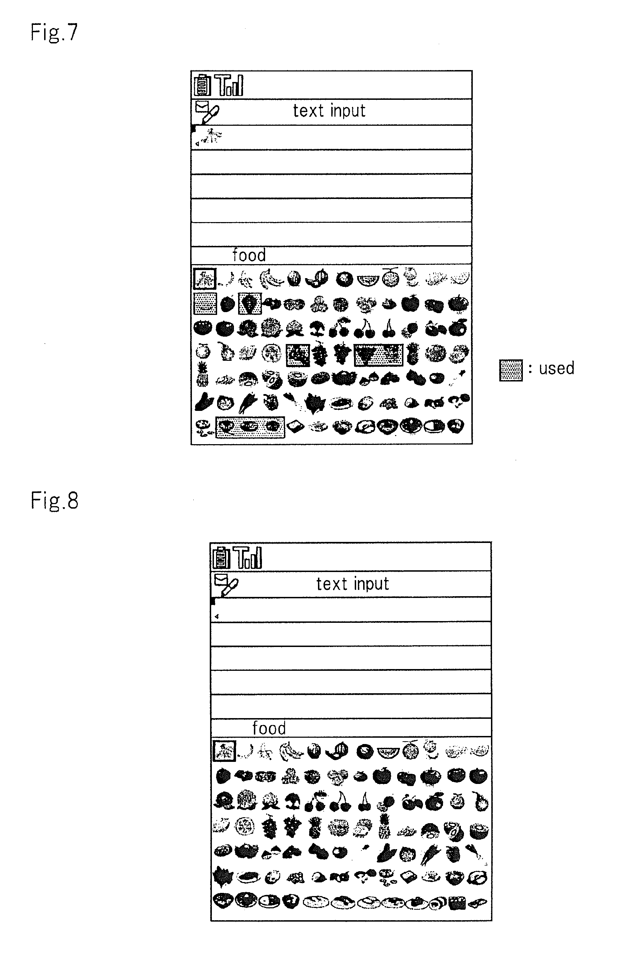

FIG. 7 shows an example of the display in which a half-tone dot meshing process in grey has been implemented upon used pictographs.

As shown in FIG. 7, CPU 133 implements, for example, a grey half-tone dot meshing process upon used pictographs in the list of pictographs, i.e., pictographs having a use record, and carries out display on display unit 132. Alternatively, CPU 133 may subject used pictographs to a display process of underlining pictographs or enclosing pictographs in frames. Transmission device 10 can thus report to the user used pictographs in the list of pictographs.

Returning to FIG. 6, when the user selects, for example, a pictograph that has not been used, CPU 133 inserts this pictograph into the text of the new e-mail.

CPU 133 then adds the destination of the new e-mail that was received from operation unit 131 and the pictograph IDs of the pictographs that were detected by operation unit 131 in mutual correspondence in the usage history management list in memory 11 (Step S98). The series of processing procedures of the data processing method of the second exemplary embodiment is thus completed.

As a result, in the second exemplary embodiment, in contrast with the first exemplary embodiment, transmission device 10 need not execute the process of checking whether or not a pictograph is a used pictograph upon receipt of each pictograph that was selected by the user. In addition, the user need not indicate whether to permit the reuse of a pictograph, whereby the time for creating e-mail and the inconvenience for the user can be reduced compared to the first exemplary embodiment.

According to the second exemplary embodiment of the present invention, in transmission device 10 that includes transmission unit 12 that transmits data, a usage history management list in which the IDs of pictographs that transmission unit 12 has transmitted and the transmission destinations of the pictographs are placed in mutual correspondence in memory 11, and upon receipt of a pictograph as transmission data of a new e-mail, processing unit 13 checks whether the destination of the new e-mail matches a transmission destination in the usage history management list. If the destination of the new e-mail matches a transmission destination in the usage history management list, processing unit 13 then identifies the used pictograph IDs that have been placed in correspondence with the destination of the new e-mail. Processing unit 13 then subjects the used pictograph within the pictograph list to a grey half-tone dot meshing process and displays the result.

The user can therefore distinguish pictographs that have been used and pictographs that have not been used within the pictograph list by simply viewing the pictograph list displayed on transmission device 10.

As a result, the user is able to avoid transmitting pictographs that are identical to pictographs that have already been transmitted to a transmission partner of a new e-mail. In other words, transmission device 10 is able to reduce the transmission of pictographs to a transmission destination that are the same as pictographs that have already been transmitted to the transmission destination by transmission unit 12.

In the present exemplary embodiment, moreover, although explanation regarded an example in which the used pictographs within a pictograph list were subjected to a display process that differs from that of other pictographs, the display method for avoiding reuse of used pictographs is not limited to this form. For example, the display method shown in FIG. 8 may also be used.

FIG. 8 shows an example of a display in which pictographs other than used pictographs are displayed.

In FIG. 8, processing unit 13, when having referred to the usage history management list to identify used pictographs that have been placed in correspondence with the destination of a new e-mail, displays pictographs other than the used pictograph within the pictograph list.

As a result, the user is unable to select pictographs that have already been transmitted to the destination of the new e-mail, and reuse of used pictograph can thus be prevented. As a result, transmission device 10 can prevent the transmission of pictographs that are the same as these pictographs that have already been transmitted by transmission unit 12.

Typically, when a user operates a portable telephone to transmit an e-mail, an e-mail is usually produced that is addressed to a person who is registered in the telephone directory data in the portable telephone. As a result, the telephone directory data may be used as the usage history management list.

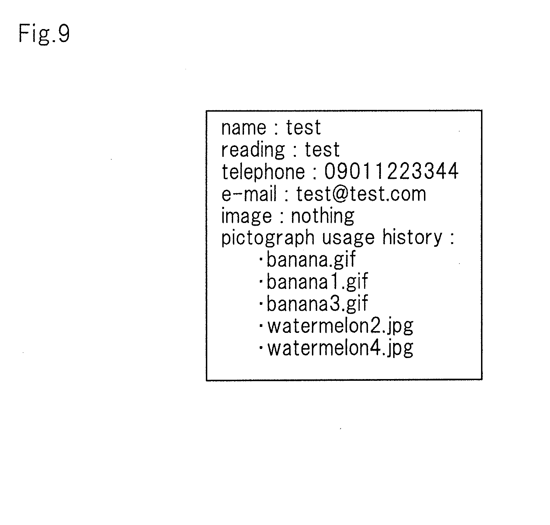

FIG. 9 shows an example in which telephone directory data are used as the usage history management list.

In the telephone directory data, a pictograph usage history is provided in addition to the names (readings) of registered persons, telephone numbers, e-mail addresses, and image data showing the registered persons that are typically provided. Through the use of the pictograph usage history, transmission device 10 is able to display a pictograph list as shown in FIG. 7 or FIG. 8. In this case, functions already provided in the portable telephone can be utilized, thus facilitating the realization of the present invention. In addition, when, for example, infrared communication is used to transfer the telephone directory data in transmission device 10 to an external device, the usage history management list must be deleted.

As an example of the effects of the present invention, data that have been transmitted to a transmission destination of data can be easily searched.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2011-093067 filed on April 19, 2011, the content of which is incorporated by reference.

### Explanation of Reference Numbers

- 10: transmission device
- 11: memory
- 12: transmission unit
- 13: processing unit
- 131: operation unit
- 132: display unit
- 133: CPU

## Claims

1. A transmission device comprising:
transmission means that transmits data to a transmission destination;
holding means that holds in mutual correspondence predetermined data that have been transmitted by said transmission means and transmission destinations of the predetermined data; and
processing means that, upon receipt of transmission data that are scheduled for transmission, refers to said holding means to identify predetermined data that have been placed in correspondence with the transmission destination of said transmission data as relevant data, and reports identified information according to said relevant data.

2. The transmission device according to claim 1, wherein:
said holding means holds, for each said predetermined data, the predetermined data and the transmission destination of the predetermined data in mutual correspondence; and
said processing means identifies, from among said relevant data, identified relevant transmission data that are contained in said transmission data and reports information as said identified information indicating that data identical to said identified relevant data are to be transmitted.

3. The transmission device according to claim 1 or claim 2, wherein:
said predetermined data are pictograph data; and
said processing means displays pictographs of said relevant data as said identified information.

4. The transmission device according to claim 1 or claim 2, wherein:
said predetermined data are pictograph data; and
said processing means displays pictographs other than said relevant data as said identified information.

5. The transmission device according to claim 4, wherein said processing means, as said identified information, further subjects pictographs of said relevant data to a display process that differs from the display process implemented upon pictographs other than said relevant data and displays the result.

6. A data processing method of a transmission device that includes transmission means that transmits data to a transmission destination, comprising:
a holding step of holding predetermined data that were transmitted by said transmission means and the transmission destinations of the predetermined data in mutual correspondence in holding means; and
a processing step of, upon receipt of transmission data that are scheduled for transmission, referring to said holding means to identify predetermined data that have been placed in correspondence with the transmission destination of said transmission data as relevant data and reporting identified information according to said relevant data.

7. The data processing method according to claim 6, wherein:
in said holding step, for each said predetermined data, the predetermined data and the transmission destinations of the predetermined data are held in mutual correspondence in said holding means; and
in said processing step, from among said relevant data, identified relevant data that are contained in said transmission data are identified, and information is reported as said identified information that indicates that data identical to said identified relevant data are to be transmitted.

8. A computer-readable recording medium on which is recorded a program that causes a computer within a transmission device that includes transmission means that transmits data to a transmission destination to execute:
a holding procedure of holding predetermined data that have been transmitted by said transmission means and the transmission destinations of the predetermined data in mutual correspondence in holding means; and
a processing procedure of, upon receipt of transmission data scheduled for transmission, referring to said holding means to identify as relevant data predetermined data that have been placed in correspondence with the transmission destination of said transmission data, and reporting identified information according to said relevant data.
